# EUROPEAN PATENT APPLICATION

(11) **EP 4 625 671 A1**
(43) Date of publication of application: **01.10.2025**
(21) Application number: 23893989.6
(22) Date of filing: 23.11.2023
(51) Int. Cl.: H01M 50/46, H01M 4/62

(54) **BINDER, PREPARATION METHOD THEREFOR, AND BATTERY**

(30) Priority: 24.11.2022 CN 202211487963
(71) Applicant: BYD Company Limited, Shenzhen, Guangdong 518118 (CN)
(72) Inventor: JIN, Peipei, Shenzhen, Guangdong 518118 (CN); PAN, Zeng, Shenzhen, Guangdong 518118 (CN); ZHANG, Meng, Shenzhen, Guangdong 518118 (CN)
(74) Representative: Taor, Simon Edward William
(86) International application number: PCT/CN2023/133776
(87) International publication number: WO 2024/109900

(57) **Abstract**

A binder and a preparation method therefor, and a battery are provided. The binder includes a bonding material particle. The bonding material particle includes a core and a shell. The core includes a crystalline polymer. The shell wraps at least a part of an outer surface of the core, and the shell includes an amorphous polymer.

## Description

### CROSS-REFERENCE TO RELATED APPLICATIONS

The present disclosure claims priority to and benefits of Chinese Patent Application No. 202211487963.X, filed on November 24, 2022 and entitled "BINDER AND PREPARATION METHOD THEREFOR, BATTERY SEPARATOR, AND BATTERY". The entire content of the above-referenced application is incorporated herein by reference.

### FIELD

The present disclosure relates to the battery field, and in particular, to a binder and a preparation method therefor, and a battery.

### BACKGROUND

Currently, a process of bonding a separator to an electrode sheet mainly includes: The separator coated with a binder is stacked with the electrode sheet, then an electrolyte is injected, and the binder is used to swell in the electrolyte to generate adhesion, to bond the separator with the electrode sheet. However, in an existing bonding manner, the binder greatly swells in the electrolyte, and easily blocks pores of the separator movement of lithium ions between a positive electrode sheet and a negative electrode sheet is blocked, resulting in poor cycle performance of a battery.

### SUMMARY

To resolve the foregoing technical problem, the present disclosure provides a binder and a preparation method therefor, and a battery. When the binder is used in a battery, components of the battery can be bonded together before an electrolyte is injected. In addition, because a core of a bonding material particle in the binder is a crystalline polymer, a swelling degree in the electrolyte is very low, and pores of a separator cannot be blocked, thereby improving cycle performance of the battery.

A first aspect of the present disclosure provides a binder. The binder includes a bonding material particle. The bonding material particle includes a core and a shell, and the shell wraps at least a part of an outer surface of the core. The core includes a crystalline polymer, and the shell includes an amorphous polymer.

A second aspect of the present disclosure provides a method for preparing a binder. The method for preparing a binder includes: A crystalline polymer, a shell material, an emulsifier, and a solvent are mixed and stirred uniformly to obtain a mixed solution; and an initiator is added dropwise into the mixed solution, to enable the shell material to be polymerized on an outer surface of the crystalline polymer to form a shell including an amorphous polymer. The shell wraps at least a part of the outer surface of the crystalline polymer.

According to the binder and the method for preparing a binder that are provided in the present disclosure, and the bonding material particle in the binder includes a core and the shell. The core includes the crystalline polymer, and the shell includes the amorphous polymer. When the binder is used in a battery, before an electrolyte is injected, the separator may be separately bonded with a positive electrode sheet and a negative electrode sheet by heating the binder at a low temperature. In addition, because the core is the crystalline polymer, and has a low swelling degree in the electrolyte of the battery, bonding material particles are not likely to be bonded together, and pores of the battery separator cannot be blocked. This helps ions to move between the positive electrode sheet and the negative electrode sheet of the battery through the pores, thereby improving cycle performance of the battery.

A third aspect of the present disclosure provides a battery. The battery includes a positive electrode sheet, a negative electrode sheet, and a battery separator. The battery separator is arranged between the positive electrode sheet and the negative electrode sheet. The battery separator includes a base film and a bonding layer. The bonding layer is arranged on one side of the base film or two opposite sides of the base film, and the bonding layer includes the foregoing binder.

The battery separator is arranged between the positive electrode sheet and the negative electrode sheet of the battery provided in the present disclosure. The battery separator includes the base film and the bonding layer arranged on at least one side of the base film. The bonding layer includes the binder. The bonding material particle in the binder includes a core and a shell. The core includes a crystalline polymer, and the shell includes an amorphous polymer. Before an electrolyte is injected, the battery separator is heated at a low temperature. Under low-temperature heating, the amorphous polymer of the shell is melted, and the battery separator may be separately bonded with the positive electrode sheet and the negative electrode sheet of the battery. In addition, because the core is the crystalline polymer, and has a low swelling degree in the electrolyte of the battery, bonding material particles are not likely to be bonded together, and pores of the battery separator cannot be blocked. This helps ions to move between the positive electrode sheet and the negative electrode sheet of the battery, thereby improving cycle performance of the battery.

### BRIEF DESCRIPTION OF THE DRAWINGS

To describe the technical solutions in the present disclosure more clearly, the following briefly introduces the accompanying drawings required for describing the implementations. Apparently, the accompanying drawings in the following description show merely some implementations of the present disclosure, and a person of ordinary skill in the art may still derive other drawings from these accompanying drawings without creative efforts.
FIG. 1 is a schematic diagram of a structure of a bonding material particle in a binder according to an embodiment of the present disclosure;
FIG. 2 is a flowchart of a method for preparing a binder according to an embodiment of the present disclosure;
FIG. 3 is a schematic diagram of a cross-sectional structure of a battery separator according to an embodiment of the present disclosure;
FIG. 4 is a schematic diagram of a cross-sectional structure of a battery separator according to another embodiment of the present disclosure;
FIG. 5 is a schematic diagram of a cross-sectional structure of a battery according to an embodiment of the present disclosure;
FIG. 6 is a scanning electron microscope diagram of a bonding layer of a battery separator according to an embodiment of the present disclosure; and
FIG. 7 is a scanning electron microscope diagram of a bonding layer of a battery separator according to another embodiment of the present disclosure.

Descriptions of main elements: bonding material particle 100; core 10; shell 20; battery separator 200; base film 30; bonding layer 40; first bonding layer 41; second bonding layer 42; battery 300; positive electrode sheet 50; negative electrode sheet 60.

### DETAILED DESCRIPTION

The technical solutions in embodiments of the present disclosure are clearly and completely described below with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

In the description of the present disclosure, terms such as "first", "second" are used to distinguish different objects, not to describe a specific order. In addition, orientation or position relationships indicated by terms such as "top", "bottom", "outside" are based on orientation or position relationships shown in the accompanying drawings, and are used only for ease of describing the present disclosure and brevity of description, rather than indicating or implying that the mentioned apparatus or element needs to have a particular orientation or needs to be constructed and operated in a particular orientation. Therefore, such terms should not be construed as a limitation of the present disclosure.

In the description of the present disclosure, unless otherwise explicitly specified or defined, a term such as "connection" should be understood in a broad sense. For example, the connection may be a fixed connection, a detachable connection, or an integral connection; or the connection may be a direct connection, an indirect connection through an intermediate medium, or internal communication between two elements; or may be a communication connection; or may be an electrical connection. A person of ordinary skill in the art may understand the specific meanings of the foregoing terms in the present disclosure according to specific situations.

The figures provided in the embodiments of the present disclosure only describe a basic idea of the present disclosure in a schematic manner. The figures only show components related to the present disclosure instead of drawing according to the number, shapes, and sizes of components during actual implementation. Types, numbers, and ratios of the components during actual implementation may be randomly changed, and a component layout form thereof may be more complex.

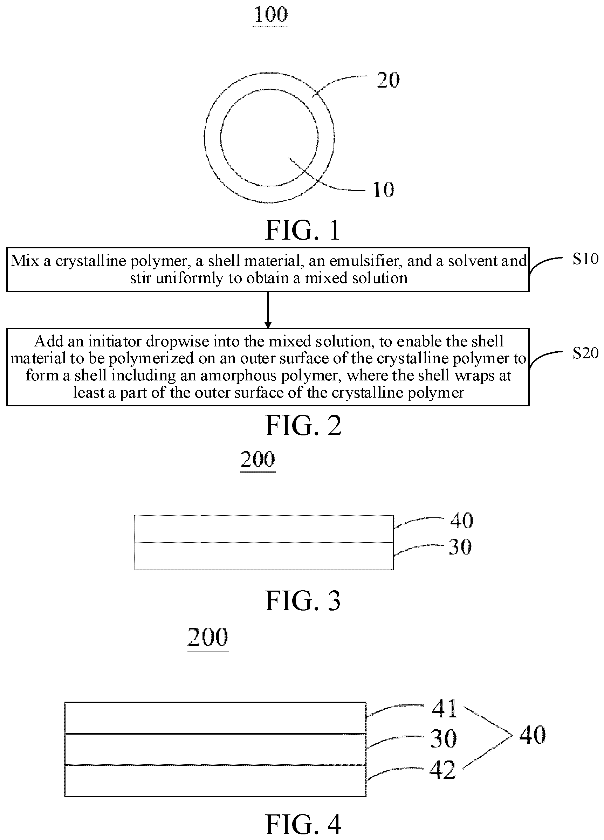

The present disclosure provides a binder. The binder includes a bonding material particle. FIG. 1 is a schematic diagram of a structure of a bonding material particle 100 in a binder according to an embodiment of the present disclosure. As shown in FIG. 1, the bonding material particle 100 includes a core 10 and a shell 20. The shell 20 wraps at least a part of an outer surface of the core 10. The core 10 includes a crystalline polymer, and the shell 20 includes an amorphous polymer.

The binder provided in this embodiment of the present disclosure includes the bonding material particle 100. The bonding material particle 100 includes the core 10 and the shell 20. When the binder is used in a battery, the binder is provided on a separator of the battery. Because the shell 20 includes the amorphous polymer, a battery core may be encapsulated in a dry pressing and shaping manner. To be specific, before an electrolyte is injected, the amorphous polymer of the shell 20 is melted and softened by heating the binder at a low temperature, to generate adhesion, so as to separately bond the separator with a positive electrode sheet and a negative electrode sheet. Compared with an existing bonding manner in which a separator coated with a binder is stacked with electrode sheets, then an electrolyte is injected, and the binder is used to swell in the electrolyte to generate adhesion, so as to bond the separator with the electrode sheets, the bonding material particle in the binder provided in this embodiment of the present disclosure can bond the separator with the electrode sheets before the electrolyte is injected, so that the separator and the electrode sheets are fixed together, and before the separator and the positive electrode sheet as well as the negative electrode sheet are encapsulated into a rigid shell, the separator and the positive electrode sheet as well as the negative electrode sheet can be prevented from being offset and misaligned, affecting battery performance. In addition, because the core 10 includes the crystalline polymer, a swelling degree of the core 10 in the electrolyte of the battery is very low, bonding material particles 100 can be prevented from bonding together, and pores of the separator of the battery cannot be blocked. This helps ions to move between the positive electrode sheet and the negative electrode sheet of the battery through the pores, thereby improving cycle performance of the battery. In a process of dry pressing and shaping, the core 10 may be softened, by increasing a temperature to be equal to or slightly higher than a melting initiation temperature of the core 10, to generate adhesion, and further, the separator of the battery is separately bonded with the positive electrode sheet and the negative electrode sheet, so that bonding strength between the separator and the positive electrode sheet as well as the negative electrode sheet can be improved.

The core 10 and the shell 20 form a core-shell structure. As shown in FIG. 1, the shell 20 may completely wrap the core 10. In another embodiment, the shell 20 may wrap a part of an outer surface of the core 10.

A glass-transition temperature of the amorphous polymer of the shell 20 is greater than or equal to 0°C and less than or equal to 70°C. The glass-transition temperature of the amorphous polymer of the shell 20 may be, but is not limited to, 0°C, 10°C, 20°C, 30°C, 35°C, 40°C, 45°C, 50°C, 55°C, 60°C, 65°C, 70°C, or the like. In some embodiments, the glass-transition temperature of the amorphous polymer of the shell 20 is greater than or equal to 10°C and less than or equal to 70°C. In some embodiments, the glass-transition temperature of the amorphous polymer of the shell 20 is greater than or equal to 30°C and less than or equal to 70°C. The glass-transition temperature of the amorphous polymer of the shell 20 is greater than or equal to 30°C, in other words, the amorphous polymer of the shell 20 is in a glassy state at an ordinary temperature, so that after the binder is provided on a base film to form the separator of the battery, the separator does not be bonded together. The glass-transition temperature of the amorphous polymer of the shell 20 is less than or equal to 70°C. This helps the binder to be bonded with a to-be-bonded object. For example, when the binder is used in the battery, the glass-transition temperature of the amorphous polymer of the shell 20 is low. When the binder is provided on the base film, the binder is heated at a low temperature, so that the amorphous polymer can be melted and generate adhesion, and the bonding material particle can be bonded on the base film to form the separator. In addition, the separator can be bonded with the electrode sheets by melting and heating the amorphous polymer on the separator at a low temperature, thereby helping the separator to be bonded with the electrode sheets. In some embodiments, the shell 20 is formed by an amorphous polymer. A glass-transition temperature of the amorphous polymer is a glass-transition temperature of the shell 20.

The glass-transition temperature of the shell 20 may be measured by using differential scanning calorimetry (Differential Scanning Calorimetry, DSC). Specifically, about 20 mg of bonding material particles 100 were placed in a crucible, the crucible was heated at a temperature increasing rate of 5°C/min, a heat flow rate and a temperature during a temperature increasing process were recorded, until the temperature reached 80°C, to obtain a DSC curve, and the glass-transition temperature of the shell 20 was determined based on the DSC curve.

In some embodiments, the binder is used in the battery. The swelling degree of the core 10 in the electrolyte of the battery is greater than 0 and less than or equal to 0.5, to be specific, the swelling degree of the core 10 in the electrolyte of the battery is very low, so that after the electrolyte is injected, the bonding material particles 100 are not likely to be bonded together. This helps ions in the electrolyte to pass through gaps between the bonding material particles 100 to move between the positive electrode sheet and the negative electrode sheet of the battery. In addition, because the bonding material particles 100 are not likely to be bonded together, the pores of the separator of the battery can be prevented from being blocked, further helping the ions in the electrolyte to move between the positive electrode sheet and the negative electrode sheet, thereby improving cycle performance of the battery. In addition, the swelling degree of the core 10 in the electrolyte is very low, and an amount of electrolytes absorbed by the core 10 is very small, so that a problem that internal resistance of the battery increases due to a small amount of the electrolytes can be avoided. The swelling degree of the core 10 in the electrolyte of the battery may be, but is not limited to, 0.1, 0.2, 0.3, 0.4, 0.5, or the like.

A swelling degree of the bonding material particle 100 in the electrolyte ranges from 0 to 6. In some embodiments, the swelling degree ranges from 0 to 4. In some embodiments, the swelling degree ranges from 0 to 3. The swelling degree of the bonding material particle 100 in the electrolyte may be, but is not limited to, 1, 2, 3, 4, 5, 6, or the like. The swelling degree of the bonding material particle 100 in the electrolyte is low, so that the bonding material particles 100 can be prevented from bonding together, and the pores of the separator of the battery cannot be blocked. This helps the ions to move between the positive electrode sheet and the negative electrode sheet of the battery through the pores, thereby improving cycle performance of the battery.

A specific process of measuring the swelling degree of the bonding material particle 100 in the electrolyte may be: The bonding material particle 100 was placed in a Teflon model with a size of 5 cm*5 cm*2 cm, the Teflon model was placed in an oven for baking, where a temperature of the oven was 250°C, the bonding material particle 100 was melted during the baking, after being baked for 12h, the Teflon model was taken out and allowed to cool, and the baked bonding material particle 100 was pressed to obtain an adhesive film with a thickness of 0.5 cm; the adhesive film was cut to obtain a test film with a length and width of 1 cm and 1 cm respectively, the test film was weighted, and a weight W1 was recorded; the test film was immersed in a container accommodating the electrolyte, the container was sealed, and the container was placed in the oven, where a temperature of the oven was 60°C; after 72h, the test film was taken out from the container and weighted, and a weight W2 was recorded; and the swelling degree S1 of the bonding material particle 100 in the electrolyte was calculated, where S1=W2/W1.

In some embodiments, the swelling degree of the core 10 in the electrolyte of the battery is greater than 0 and less than or equal to 0.3. This may further reduce the swelling of the core 10 in the electrolyte of the battery. In some embodiments, the swelling degree of the core 10 in the electrolyte of the battery is greater than 0 and less than or equal to 0.15, and the swelling of the core 10 in the electrolyte of the battery can be further reduced. This further helps improve the cycle performance of the battery and reduce the internal resistance of the battery.

In some embodiments, a mass ratio of the core 10 to the shell 20 is (60-90):(10-40). When the mass ratio of the core 10 to the shell 20 is within the range, bonding performance of the binder is good, and the overall swelling degree of the bonding material particle 100 is low.

A volume of an outer surface of the core 10 covered by the shell 20 can be controlled by controlling the mass ratio of the core 10 to the shell 20.

In some embodiments, the binder is used in the battery, and a swelling degree of the shell 20 in the electrolyte of the battery is greater than 0 and less than or equal to 5. The swelling degree of the shell 20 is not high, and a small amount of the electrolytes may be absorbed. In addition, compared with the core 10, a proportion of the shell 20 is small, so that when the bonding material particle 100 is in the electrolyte, the overall swelling degree of the bonding material particle 100 is low, an amount of absorbed electrolytes is small, and the bonding material particles 100 are not likely to be bonded together, thereby helping the ions in the electrolyte to pass through the bonding material particles 100 to move between the positive electrode sheet and the negative electrode sheet of the battery. In addition, the bonding material particles 100 are not likely to be bonded together, so that the pores of the separator of the battery can be prevented from being blocked, further helping the ions in the electrolyte to move between the positive electrode sheet and the negative electrode sheet, thereby improving the cycle performance of the battery. In addition, the swelling degree of the shell 20 is not high, and the amount of the absorbed electrolytes is small, so that a problem that the internal resistance of the battery increases due to excessive absorption of the electrolyte can be avoided.

In some embodiments, the swelling degree of the shell 20 in the electrolyte of the battery is greater than 1 and less than or equal to 3. Optionally, the swelling degree of the shell 20 in the electrolyte of the battery is greater than 1 and less than or equal to 2.5.

In some embodiments, an average particle size (D50) of the bonding material particle 100 ranges from 0.2 µm to 15 µm, and energy density of the battery and bonding performance may be both considered. The average particle size of the bonding material particle 100 may be measured by using a particle size analyzer. D50 refers to a corresponding particle size when an accumulative particle size distribution percentage in a sample reaches 50%. In other words, in multiple bonding material particles 100, a quantity of the bonding material particles 100 with particle sizes greater than D50 accounts for 50% of a total quantity, and a quantity of the bonding material particles 100 with particle sizes less than D50 accounts for 50% of the total quantity.

An average particle size of the core 10 ranges from 0.1 µm to 10 µm, and an average thickness of the shell 20 ranges from 0.1 µm to 5 µm.

When the particle size of the bonding material particle 100 ranges from 0.2 µm to 15 µm, a small amount of the electrolytes can be absorbed by the shell 20, so that the bonding material particles 100 can be prevented from being bonded together, and bonding performance of the bonding material particles 100 is ensured. The average particle size of the core 10 may be, but is not limited to, 0.1 µm, 0.5 µm, 1 µm, 2 µm, 3 µm, 4 µm, 5 µm, 6 µm, 7 µm, 8 µm, 9 µm, 10 µm, or the like. The average thickness of the shell 20 may be, but is not limited to, 0.1 µm, 0.5 µm, 1 µm, 2 µm, 3 µm, 4 µm, 5 µm, or the like.

In some embodiments, the average particle size of the bonding material particle 100 ranges from 0.5 µm to 10 µm, so that the bonding performance and the energy density of the battery can be better considered. In some embodiments, the average particle size of the bonding material particle 100 ranges from 0.5 µm to 5 µm, so that the bonding performance of the bonding material particle 100 and the energy density of the battery can be further considered.

In some embodiments, the average particle size of the core 10 ranges from 0.4 µm to 6 µm, so that the bonding performance and the energy density of the battery can be better considered. Optionally, the average particle size of the core 10 ranges from 0.4 µm to 4 µm, so that the bonding performance of the bonding material particle 100 and the energy density of the battery can be further considered.

In some embodiments, the average thickness of the shell 20 ranges from 0.1 µm to 3 µm, so that an amount of the electrolytes absorbed by the shell 20 can be reduced, and the energy density of the battery can be further considered. In some embodiments, the average thickness of the shell 20 ranges from 0.1 µm to 1.5 µm, so that the amount of the electrolytes absorbed by the shell 20 can be further reduced, and the energy density of the battery can be further considered.

In some embodiments, a value of the average thickness of the shell 20 is less than a value of the average particle size of the core 10, so that an amount of the electrolytes absorbed by the bonding material particle 100 per unit particle size can be reduced.

In some embodiments, crystallinity of the crystalline polymer of the core 10 ranges from 50% to 95%. In some embodiments, the core 10 is formed by a crystalline polymer, and crystallinity of the crystalline polymer is crystallinity of the core 10. The crystallinity of the crystalline polymer of the core 10 may be, but is not limited to, 50%, 55%, 60%, 65%, 70%, 75%, 80%, 85%, 90%, 95%, or the like.

The crystallinity of the core 10 may be measured by using differential scanning calorimetry (Differential Scanning Calorimetry, DSC). Specifically, about 20 mg of the bonding material particles 100 were placed in a crucible, the crucible was heated at a temperature increasing rate of 5°C/min, and a heat flow rate and a temperature during a temperature increasing process were recorded, until the temperature reached 250°C, to obtain a DSC curve. Enthalpy of the core 10 per unit mass was determined based on the DSC curve, and then theoretical enthalpy of a material at 100% crystallinity was obtained based on querying of the material of the core 10. The crystallinity of the core 10 is equal to a ratio of the enthalpy of the core 10 per unit mass to the theoretical enthalpy.

When the crystallinity of the crystalline polymer is within the range, a proportion of a crystalline region of the crystalline polymer is high, and the crystalline region does not swell in the electrolyte, so that the swelling degree of the core 10 in the electrolyte is very low, and the bonding material particles 100 are not likely to be bonded in the electrolyte. In addition, when the electrolyte is injected, because the crystalline region of the crystalline polymer does not swell, and the crystalline polymer has high crystallinity, the crystalline region may play a role of supporting a framework, so that gaps exist between the separator and the electrode sheets (the positive electrode sheet/the negative electrode sheet) of the battery, and the electrolyte may fully wet the separator and the electrode sheets through the gaps, thereby improving a wetting effect of the electrolyte, reducing the internal resistance of the battery, and improving the cycle performance of the battery.

In some embodiments, the core 10 includes a polyolefin-based resin, that is, the crystalline polymer includes a polyolefin-based resin.

In some embodiments, the polyolefin-based resin includes, but is not limited to, at least one of polyethylene, polypropylene, polyvinylidene fluorine, poly-1-butene, and poly-4-methyl-1-pentene. The foregoing polyolefin-based resins are all crystalline polymers, and include crystalline regions. The polyethylene may include at least one of low-density polyethylene, high-density polyethylene, and linear low-density polyethylene.

In some embodiments, a melting point of the crystalline polymer of the core 10 is greater than or equal to 90°C and less than or equal to 200°C, that is, a melting point of the core 10 is greater than or equal to 90°C and less than or equal to 200°C.

The melting point of the core 10 may be measured by using differential scanning calorimetry (Differential Scanning Calorimetry, DSC). Specifically, about 20 mg of the bonding material particles 100 were placed in a crucible, the crucible was heated at a temperature increasing rate of 5°C/min, a heat flow rate and a temperature during a temperature increasing process were recorded, until the temperature reaches 250°C, to obtain a DSC curve, and the melting point of the core 10 was determined based on the DSC curve.

In some embodiments, when the binder is used in the battery, the binder may be arranged on opposite sides of the base film, and the shell 20 is melted and softened by heating the binder at a low temperature to be bonded to the opposite sides of the base film, so as to form the separator. Then, the positive electrode sheet and the negative electrode sheet are placed on opposite sides of the separator, and the separator is bonded with the positive electrode sheet and the negative electrode sheet by hot pressing. During the hot pressing, a temperature may be increased to be equal to or greater than the melting initiation temperature of the core 10 and be less than the melting point of the core 10. When the core 10 is in an environment in which a temperature is equal to the melting initiation temperature of the core 10, the core 10 starts to melt and generate specific adhesion, and the separator can be bonded with the positive electrode sheet or the negative electrode sheet. After cooling, the separator, the positive electrode sheet, and the negative electrode sheet are fixed as a whole. In addition, during the hot pressing, the amorphous polymer is also melted and generate adhesion, and can work together with the crystalline polymer to bond the separator with the positive electrode sheet and the negative electrode sheet. The temperature during the hot pressing may be lower than the melting point of the core 10, to prevent the core 10 from being completely melted into a liquid and the bonding material particles 100 from bonding together.

A melting peak of the core 10 may be obtained by using a differential scanning calorimetry (Differential Scanning Calorimetry, DSC) device, and the melting initiation temperature of the core 10 is determined based on the obtained melting peak.

When a hot box test is performed on the battery including the binder, because the core 10 has a high melting point, the core 10 can absorb a part of heat generated by the battery during a heating process. Therefore, a success rate of the hot box test for the battery can be improved.

In some embodiments, the melting point of the crystalline polymer of the core 10 is greater than or equal to 90°C and less than or equal to 160°C. Optionally, the melting point of the core 10 is greater than or equal to 90°C and less than or equal to 140°C, so that a temperature at which the core 10 starts to melt is further reduced, thereby further reducing the temperature during hot pressing.

In some embodiments, the amorphous polymer of the shell 20 is formed by polymerizing at least a first monomer, and the first monomer is a monomer including an allyl group. The shell 20 that is an amorphous polymer may be obtained by polymerizing the monomer including the allyl group.

In some embodiments, the monomer including the allyl group includes, but is not limited to, at least one of methyl acrylate, ethyl acrylate, methyl methacrylate, ethyl methacrylate, and acrylonitrile. A glass-transition temperature of the shell 20 formed by using at least one of the foregoing monomers including the allyl group may range from 0°C to 70°C, and a swelling degree may range from 0 to 5. The acrylonitrile includes, but is not limited to, methacrylonitrile.

In some embodiments, the shell 20 includes a polymer obtained by polymerizing the first monomer and a second monomer, and the second monomer is a monomer including an acid group.

The shell 20 may be easily wetted by the electrolyte by adding the monomer including the acid group.

In some embodiments, the monomer including the acid group includes at least one of a compound including a carboxyl group, a compound including a sulfonic group, and a compound including a phosphonic group. The compound including the carboxyl group may include monocarboxylic acid and/or dicarboxylic acid. Monocarboxylic acid includes at least one of acrylic acid, methacrylic acid, and crotonic acid. Dicarboxylic acid includes at least one of maleic acid, fumaric acid, and itaconic acid. The compound including the sulfonic group may include at least one of vinylsulfonic acid, methyl vinyl sulfonic acid, (methyl)allyl sulfonic acid, (methyl)acrylate-2-ethyl sulfonate, 2-acrylamido-2-methylpropanesulfonic acid, and 3-allyloxy-2-hydroxypropanesulfonic acid. The compound including the phosphonic group may include at least one of 2-(meth)acryloyloxyethyl phosphate, 2-(meth)acryloyloxyethyl methyl phosphate, and ethyl (meth)acryloyloxyethyl phosphate.

In some embodiments, a mass ratio of the first monomer to the second monomer in the polymer of the shell is (50-99.9):(0.1-50). When the mass ratio of the first monomer to the second monomer is within the foregoing range, bonding performance and wettability of the formed shell 20 are good. The first monomer is a structural unit formed by polymerizing the first monomer, and the second monomer is a structural unit formed by polymerizing the second monomer.

The binder further includes a solvent, and the bonding material particles 100 are dispersed in the solvent. The solvent may be water, or may be a mixture of water and an organic solvent. The organic solvent may be any one or more of cycloaliphatic hydrocarbons such as cyclopentane and cyclohexane; aromatic hydrocarbons such as toluene and xylene; ketones such as methyl ethyl ketone and cyclohexanone; esters such as ethyl acetate, butyl acetate, γ-butyrolactone, ε-caprolactone; nitriles such as acetonitrile and propionitrile; ethers such as tetrahydrofuran and ethylene glycol diethyl ether; and alcohols such as methanol, ethanol, isopropanol, ethylene glycol, and ethylene glycol monomethyl ether.

FIG. 2 is a flowchart of a method for preparing a binder according to an embodiment of the present disclosure. The method for preparing a binder may be configured to prepare the binder provided in any one of the foregoing embodiments. As shown in FIG. 2, the method for preparing a binder includes the following steps:
S10: A crystalline polymer, a shell material, an emulsifier, and a solvent are mixed and stirred uniformly to obtain a mixed solution.
S20: An initiator is added dropwise into the mixed solution, to enable the shell material to be polymerized on an outer surface of the crystalline polymer to form a shell 20 including an amorphous polymer, where the shell 20 wraps at least a part of the outer surface of the crystalline polymer.

The crystalline polymer wrapped by the shell 20 forms the foregoing core 10, so that the shell 20 and the crystalline polymer form the foregoing bonding material particle 100. Bonding material particles 100 are dispersed in the solvent, to obtain the binder.

According to the method for preparing a binder provided in the present disclosure, the prepared binder includes the bonding material particle 100. The bonding material particle 100 includes the core 10 and the shell 20. When the binder is used in a battery, the binder is provided on a separator of the battery. Because the formed shell 20 is an amorphous polymer, a battery core may be encapsulated in a dry pressing and shaping manner. To be specific, before an electrolyte is injected, the amorphous polymer of the shell 20 is melted and softened by heating the binder at a low temperature, to generate adhesion, so as to separately bond the separator with a positive electrode sheet and a negative electrode sheet. Compared with an existing bonding manner in which a separator coated with a binder is stacked with electrode sheets, then an electrolyte is injected, and the binder is used to swell in the electrolyte to generate adhesion, so as to bond the separator with the electrode sheets, the bonding material particle in the binder provided in this embodiment of the present disclosure can bond the separator with the electrode sheets before the electrolyte is injected, so that the separator and the electrode sheets are fixed together, and before the separator and the positive electrode sheet as well as the negative electrode sheet are encapsulated into a rigid shell, the separator and the positive electrode sheet as well as the negative electrode sheet can be prevented from being offset and misaligned, affecting battery performance. In addition, because a swelling degree of the crystalline polymer in the electrolyte of the battery is very low, bonding material particles 100 can be prevented from bonding together, and pores of the separator of the battery cannot be blocked. This helps ions to move between the positive electrode sheet and the negative electrode sheet of the battery through the pores, thereby improving cycle performance of the battery. In a process of dry pressing and shaping, the crystalline polymer may be softened, by increasing a temperature to be equal to or slightly higher than a melting initiation temperature of the crystalline polymer, to generate adhesion, and further, the separator of the battery is separately bonded with the positive electrode sheet and the negative electrode sheet, so that bonding strength between the separator and the positive electrode sheet as well as the negative electrode sheet can be improved.

A glass-transition temperature of the formed shell 20 is greater than or equal to 0°C and less than or equal to 70°C.

The crystalline polymer, the shell material, the emulsifier, and the solvent might be added to a reaction tank and stirred for 1h, to obtain the mixed solution. Then, the reaction tank was heated, so that a temperature of the mixed solution increased to 60°C to 80°C. When the mixed solution was stirred at a rotation speed of 500 rpm, the initiator was slowly added dropwise into the mixed solution while the mixed solution was stirred. After the initiator was added dropwise, the temperature of the mixed solution was kept at 80°C and the mixed solution was stirred continuously at 500 rpm for 2h to 8h, so that the bonding material particle 100 can be formed, to obtain the binder.

A dropwise addition rate of the initiator ranges from 1 mL/min to 5 mL/min. When the dropwise addition rate of the initiator is greater than 5 mL/min, the initiator is excessively quickly added dropwise, and consequently, the shell material cannot be polymerized, but accumulates on the outer surface of the crystalline polymer, so that the formed shell 20 includes unpolymerized monomer impurities, and bonding performance of the bonding material particle 100 is affected. When the dropwise addition rate of the initiator is less than 1 mL/min, the initiator is excessively slowly added dropwise, and consequently, preparing efficiency for the binder is affected.

The emulsifier may include at least one of sodium dodecyl benzene sulfonate and octadecylamine acetate. The emulsifier may alternatively be another type of emulsifier.

The initiator may include at least one of tert-butyl 2-ethylperoxyacetate, potassium persulfate, and cumene hydroperoxide. The initiator may alternatively be another type of initiator.

The solvent may be water. In another embodiment, another type of the solvent may be selected based on a requirement.

The crystalline polymer may be a polyolefin-based resin particle, and further, may be at least one of a polyethylene particle, a polypropylene particle, a polyvinylidene fluorine particle, a poly-1-butene particle, and a poly-4-methyl-1-pentene particle. The polyethylene particle may include at least one of a low-density polyethylene particle, a high-density polyethylene particle, and a linear low-density polyethylene particle.

Crystallinity of the crystalline polymer ranges from 50% to 95%.

The crystallinity of the crystalline polymer in step S10 may be measured by using differential scanning calorimetry (Differential Scanning Calorimetry, DSC). Specifically, about 20 mg of crystalline polymers ware placed in a crucible, the crucible was heated at a temperature increasing rate of 5°C/min, and a heat flow rate and a temperature during a temperature increasing process were recorded, until the temperature reached 250°C, to obtain a DSC curve. Enthalpy of the crystalline polymer per unit mass was determined based on the DSC curve, and then theoretical enthalpy of the crystalline polymer at 100% crystallinity was obtained based on querying of the crystalline polymer. The crystallinity of the crystalline polymer is equal to a ratio of the enthalpy of the crystalline polymer per unit mass to the theoretical enthalpy.

A melting point of the crystalline polymer in step S10 ranges from 90°C to 200°C. Optionally, the melting point of the crystalline polymer ranges from 90°C to 180°C. Optionally, the melting point of the crystalline polymer ranges from 90°C to 165°C.

The melting point of the crystalline polymer in step S10 may be measured by using differential scanning calorimetry (Differential Scanning Calorimetry, DSC). Specifically, about 20 mg of the crystalline polymers were placed in a crucible, the crucible was heated at a temperature increasing rate of 5°C/min, a heat flow rate and a temperature during a temperature increasing process were recorded, until the temperature reaches 250°C, to obtain a DSC curve, and the melting point of the crystalline polymer was determined based on the DSC curve.

The crystalline polymer in step S10 may be spherical, ellipsoidal, or the like.

A degree to which the shell 20 wraps the outer surface of the crystalline polymer, to be specific, wraps only a part or all of the outer surface of the crystalline polymer, may be controlled by controlling a mass ratio of the crystalline polymer to the shell material.

A mass ratio of the crystalline polymer, the shell material, the emulsifier, and the initiator is (60-90):(10-40):(0.1-2):(0.1-2), so that a mass ratio of the core 10 to the shell 20 in the formed bonding material particle 100 is (60-90):(10-40).

In some embodiments, the crystalline polymer in step S10 is in the form of particles, an average particle size (D50) of the crystalline polymer in the form of particles ranges from 0.1 µm to 10 µm, and an average thickness of the shell 20 formed by polymerization ranges from 0.1 µm to 5 µm, so that an average particle size of the formed bonding material particle 100 ranges from 0.2 µm to 15 µm. The average particle size of the crystalline polymer in the form of particles may be measured by using a particle size analyzer. D50 refers to a corresponding particle size when an accumulated particle size distribution percentage in a sample reaches 50%. In other words, in multiple crystalline polymers in the form of particles, a quantity of crystalline polymers in the form of particles with particle sizes greater than D50 accounts for 50% of a total quantity, and a quantity of crystalline polymers in the form of particles with particle sizes less than D50 accounts for 50% of the total quantity.

Optionally, an average particle size of the core 10 ranges from 0.4 µm to 7 µm. Optionally, an average particle size of the core 10 ranges from 0.4 µm to 4 µm.

Optionally, the average thickness of the formed shell 20 ranges from 0.1 µm to 3 µm. Optionally, the average thickness of the formed shell 20 ranges from 0.5 µm to 1 µm.

Optionally, the average particle size of the formed bonding material particle 100 ranges from 0.5 µm to 10 µm. Optionally, the average particle size of the formed bonding material particle 100 ranges from 0.9 µm to 5 µm.

The average particle size of the crystalline polymer in the form of particles may be measured by using the particle size analyzer. After the bonding material particle is obtained, the average particle size of the bonding material particle may be measured by using the particle size analyzer, to calculate the average thickness of the shell 20. The average thickness of the shell 20 is equal to a difference between the average particle size of the bonding material particle and the average particle size of the crystalline polymer in the form of particles.

In some embodiments, the crystalline polymer in step S10 is a polyolefin-based resin particle. In step S10, that a crystalline polymer, a shell material, an emulsifier, and a solvent are mixed and stirred uniformly to obtain a mixed solution includes: The polyolefin-based resin particle, the shell material, the emulsifier, and the solvent are mixed and stirred uniformly to obtain the mixed solution. A mass ratio of the polyolefin-based resin particle, the shell material, the emulsifier, and the initiator is (60-90):(10-40):(0.1-2):(0.1-2), so that the mass ratio of the core 10 to the shell 20 in the formed bonding material particle 100 is (60-90):(10-40).

In some embodiments, the crystalline polymer in step S10 may be a polyethylene particle in wax microemulsion. In step S10, that a crystalline polymer, a shell material, an emulsifier, and a solvent are mixed and stirred uniformly to obtain a mixed solution includes: The wax microemulsion, the shell material, the emulsifier, and the solvent are mixed and stirred uniformly to obtain the mixed solution. The wax microemulsion includes the polyethylene particle, a polyethylene emulsifier, and water. Polyethylene particles are dispersed in the water under the action of the polyethylene emulsifier, so that sedimentation of the polyethylene particles can be reduced. A particle size of the polyethylene particle ranges from 0.3 µm to 2 µm. The polyethylene particle in the wax microemulsion may be spherical, ellipsoidal, or the like.

A mass ratio of the polyethylene particle in the wax microemulsion, the shell material, the emulsifier, and the initiator is (60-90):(10-40):(0.1-2):(0.1-2). A mass ratio of the wax microemulsion to the shell material may be determined according to a mass ratio of the polyethylene particle to the shell material and solid content of the polyethylene particle in the wax microemulsion.

In some embodiments, the binder is used in the battery, and the swelling degree of the crystalline polymer in step S10 in the electrolyte of the battery is greater than 0 and less than or equal to 0.5. In some embodiments, the swelling degree of the crystalline polymer in the electrolyte of the battery is greater than 0 and less than or equal to 0.3. In some embodiments, the swelling degree of the crystalline polymer in the electrolyte of the battery is greater than 0 and less than or equal to 0.15.

A process of measuring the swelling degree of the crystalline polymer in step S10 in the electrolyte includes: The crystalline polymer was dissolved in NMP (N-Methylpyrrolidone, N-Methylpyrrolidone) to prepare a 15 wt% core material solution; the core material solution was dripped into a Teflon mold, and the Teflon mold was placed in an oven for baking for 12h to form an adhesive film with a thickness of 0.5 cm, where a temperature of the oven was 80°C; the adhesive film was cut to obtain a test film with a length and width of 1 cm and 1 cm respectively, the test film was weighted, and a weight W3 was recorded; the test film was immersed in a container accommodating the electrolyte, the container was sealed, and the container was placed in the oven, where a temperature of the oven was 60°C; after 72h, the test film was taken out from the container and weighted, and a weight W4 was recorded; and the swelling degree S2 of the crystalline polymer in the electrolyte was calculated, where S2=W4/W3.

The swelling degree S2 of the crystalline polymer in the electrolyte is a swelling degree of the core 10 in the electrolyte.

In some embodiments, the shell material includes a first monomer, and that an initiator is added dropwise into the mixed solution, to enable the shell material to be polymerized on an outer surface of the crystalline polymer to form a shell 20 including an amorphous polymer includes: The initiator is added dropwise into the mixed solution, to enable the first monomer to be polymerized on the outer surface of the crystalline polymer to form the shell 20 including the amorphous polymer.

A degree to which the formed shell 20 wraps the outer surface of the crystalline polymer may be controlled by controlling a mass ratio of the crystalline polymer to the first monomer.

In some embodiments, the shell material includes the first monomer and a second monomer. Before the crystalline polymer, the shell material, the emulsifier, and the solvent are mixed, the method for preparing a binder further includes: The first monomer and the second monomer are uniformly mixed to obtain the shell material. The first monomer and the second monomer are uniformly pre-mixed. This is beneficial to subsequent polymerization of the first monomer and the second monomer to form the shell 20.

In some embodiments, the first monomer and the second monomer in a mass ratio of (50-99.9):(0.1-50) might be added to a stirring tank, and stirred at a rotation speed of 500 rpm for 1h to obtain the shell material.

When the shell material includes the first monomer and the second monomer, that an initiator is added dropwise into the mixed solution, to enable the shell material to be polymerized on an outer surface of the crystalline polymer to form a shell 20 including an amorphous polymer includes: The initiator is added dropwise into the mixed solution, to enable the first monomer and the second monomer to be polymerized on the outer surface of the crystalline polymer to form the shell 20 including the amorphous polymer.

The first monomer and the second monomer are polymerized on the outer surface of the crystalline polymer to obtain a polymer formed by polymerization of the first monomer itself or a polymer formed by polymerization of the first monomer and the second monomer.

A degree to which the formed shell 20 wraps the outer surface of the crystalline polymer may be controlled by controlling a mass ratio of the crystalline polymer, the first monomer, and the second monomer.

The addition of the second monomer can improve surface wettability of the formed shell 20. When the binder is used in the battery, the second monomer is added, so that the electrolyte of the battery has a good wetting effect on a surface of the shell 20.

The first monomer is a monomer including an allyl group, and the monomer including the allyl group includes at least one of methacrylonitrile, methyl acrylate, ethyl acrylate, methyl methacrylate, ethyl methacrylate, and acrylonitrile. The second monomer is a monomer including an acid group, and the monomer including the acid group includes at least one of a compound including a carboxyl group, a compound including a sulfonic group, and a compound including a phosphonic group.

A glass-transition temperature of the shell 20 formed by polymerizing the first monomer or the shell 20 formed by polymerizing the first monomer and the second monomer ranges from 10°C to 70°C or 30°C to 70°C by selecting an appropriate first monomer and second monomer.

In some embodiments, the binder is used in the battery. The shell material may be selected, specifically, the first monomer is selected, or the first monomer and the second monomer are selected, to obtain the shell 20 with a swelling degree in the electrolyte greater than 0 and less than or equal to 5, or to obtain the shell 20 with a swelling degree greater than 1 and less than or equal to 3, or to obtain the shell 20 with a swelling degree greater than 1 and less than or equal to 2.5.

According to a method for measuring the swelling degree of the shell 20 in the electrolyte, a shell material corresponding to the swelling degree greater than 0 and less than or equal to 5 may be selected to prepare the shell 20, or a shell material corresponding to the swelling degree greater than 1 and less than or equal to 3 may be selected to prepare the shell 20, or a shell material corresponding to the swelling degree greater than 1 and less than or equal to 2.5 may be selected to prepare the shell 20.

In some embodiments, a shell material configured to form the shell 20 may be determined by performing a swelling degree test on a polymer formed after the shell material is directly polymerized. Specifically, the first monomer was polymerized, or the first monomer and the second monomer were polymerized, to obtain the polymer; the polymer was placed in a Teflon board model with a size of 5 cm*5 cm*2 cm, the Teflon model was placed in an oven for baking, where a temperature of the oven was 100°C, the polymer was melted during the baking, after being baked for 12h, the Teflon model was taken out and allowed to cool, and the Teflon model was pressed to obtain an adhesive film with a thickness of 0.5 cm; the adhesive film was cut to obtain a test film with a length and width of 1 cm and 1 cm respectively, the test film was weighted, and a weight W5 was recorded; the test film was immersed in a container accommodating the electrolyte, the container was sealed, and the container was placed in the oven, where a temperature of the oven was 60°C; after 72h, the test film was taken out from the container and weighted, and a weight W6 was recorded; and the swelling degree S3 of the shell material in the electrolyte was calculated, where S3=W6/W5.

The swelling degree S3 of the shell material in the electrolyte is the swelling degree of the shell 20 in the electrolyte.

The shell material corresponding to the swelling degree greater than 0 and less than or equal to 5 is selected to prepare the shell 20, or the shell material corresponding to the swelling degree greater than 1 and less than or equal to 3 is selected to prepare the shell 20, or the shell material corresponding to the swelling degree greater than 1 and less than or equal to 2.5 is selected to prepare the shell 20.

In the foregoing embodiments, the descriptions of each embodiment have different focuses, and for a part that is not described in detail in an embodiment, reference may be made to the relevant descriptions of other embodiments.

The method for preparing a binder corresponds to the foregoing binder. Reference may be made to the content of the embodiments of the foregoing binder for more detailed descriptions, and mutual reference may also be made to the method for preparing a binder and the content of the foregoing binder.

FIG. 3 is a schematic diagram of a cross-sectional structure of a battery separator 200 according to an embodiment of the present disclosure. As shown in FIG. 3, the battery separator 200 includes a base film 30 and a bonding layer 40. The bonding layer 40 is arranged on one side of the base film 30. The bonding layer 40 includes the binder according to any one of the foregoing embodiments. The bonding layer 40 is configured to be bonded with a positive electrode sheet or a negative electrode sheet.

FIG. 4 is a schematic diagram of a cross-sectional structure of a battery separator 200 according to another embodiment of the present disclosure. As shown in FIG. 4, a bonding layer 40 includes a first bonding layer 41 and a second bonding layer 42. The first bonding layer 41 and the second bonding layer 42 are respectively arranged on opposite sides of a base film 30. Both the first bonding layer 41 and the second bonding layer 42 include the bonding material particle 100 in the binder according to any one of the foregoing embodiments. The first bonding layer 41 and the second bonding layer 42 are respectively configured to be bonded with a positive electrode sheet and a negative electrode sheet.

The base film 30 may be in a porous structure, and ions in an electrolyte may move between the positive electrode sheet and the negative electrode sheet through pores of the base film 30.

A material of the base film 30 may be a polyolefin-based resin, for example, polyethylene or polypropylene.

In some embodiments, the bonding layer 40 further includes a filler, and the filler includes a heat-resistant material.

The heat-resistant material includes at least one of aluminum oxide, silicon dioxide, boehmite, magnesium hydroxide, calcium oxide, and titanium oxide. A main component of the boehmite is hydrated aluminum oxide.

The filler may be a powdered heat-resistant material, for example, powdered aluminum oxide or powdered silicon dioxide.

Heat-resistant performance of the bonding layer 40 can be improved by adding the heat-resistant material, so that heat-resistant performance of the battery separator 200 during hot pressing and high-temperature use can be improved, and heat resistance and safety of the battery can be improved. In addition, the addition of the heat-resistant material can improve surface wettability of the battery separator 200, so that it is easier for the electrolyte to spread on the battery separator 200.

An embodiment of the present disclosure further provides a method for preparing a battery separator. The method for preparing a battery separator includes: The binder prepared in any one of the foregoing embodiments is at least coated on a base film 30; and the base film 30 is dried, to remove a solvent from the binder coated on the base film 30 and form a bonding layer 40 located on the base film 30, so that a battery separator 200 is prepared.

In some embodiments, the binder may be coated on one side of the base film 30, and the solvent in the binder is removed, to form the bonding layer 40.

In some other embodiments, the binder may be coated on two opposite sides of the base film 30, and the solvent in the binder is removed, to form a first bonding layer 41 and a second bonding layer 42.

The binder may be coated on the base film 30 by using one or more of coating manners such as micro gravure roll coating, dot coating, rotation spraying, and extrusion coating.

The base film 30 may be dried in an air drying manner such as warm air, hot air, or low-humidity air. Alternatively, the base film 30 may be dried in an energy ray irradiation manner such as an infrared ray, a far infrared ray, or an electron beam. A specific drying manner may be selected based on a type of the solvent in the binder.

The battery separator 200 prepared by forming the bonding layer 40 on the base film 30 may be separately bonded with the positive electrode sheet and the negative electrode sheet by using the bonding layer 40, in other words, the battery separator 200 is fixed to the positive electrode sheet and the negative electrode sheet. Therefore, during encapsulation, offset and misalignment between the battery separator 200 and the positive electrode sheet as well as the negative electrode sheet can be avoided, to avoid direct contact and a short circuit between the positive electrode sheet and the negative electrode sheet, thereby improving battery performance.

In some embodiments, that the binder prepared in any one of the foregoing embodiments is at least coated on a base film 30 includes: The binder prepared in any one of the foregoing embodiments and the filler are uniformly mixed to obtain a slurry, where the filler includes a heat-resistant material; and the slurry is coated on the base film 30.

The slurry may be coated on one side or two opposite sides of the base film 30.

The method for preparing a battery separator corresponds to the foregoing battery separator 200. For more detailed descriptions, reference may be made to the content of the embodiments of the foregoing battery separator 200, and mutual reference may also be made to the method for preparing a battery separator and the content of the foregoing battery separator 200.

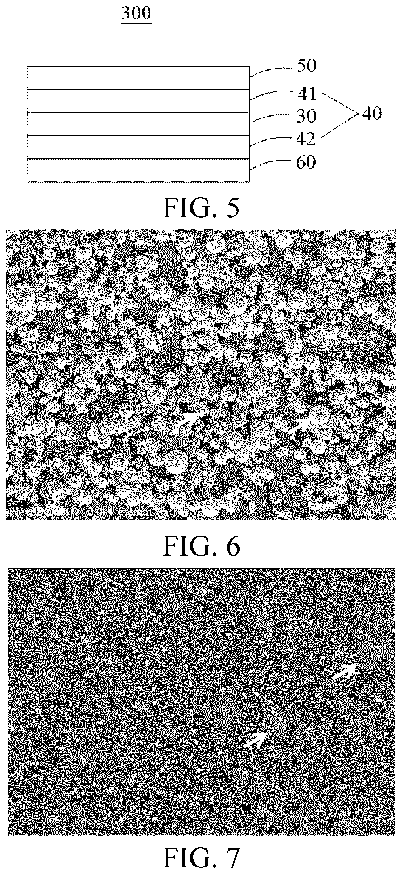

FIG. 5 is a schematic diagram of a cross-sectional structure of a battery 300 according to an embodiment of the present disclosure. As shown in FIG. 5, the battery 300 includes a positive electrode sheet 50, a battery separator 200, and a negative electrode sheet 60. The battery separator 200 is arranged between the positive electrode sheet 50 and the negative electrode sheet 60. The battery separator 200 includes the foregoing bonding layer 40. The bonding layer 40 is configured to bond the positive electrode sheet 50 with the negative electrode sheet 60. The bonding layer 40 includes the bonding material particle 100 in the binder provided in any one of the foregoing embodiments.

In some embodiments, as described above, the battery separator 200 further includes a base film 30. As shown in FIG. 5, the bonding layer 40 includes a first bonding layer 41 and a second bonding layer 42 respectively arranged on two opposite sides of the base film 30. The positive electrode sheet 50 is arranged on one side of the first bonding layer 41 away from the base film 30. The negative electrode sheet 60 is arranged on one side of the second bonding layer 42 away from the base film 30. In other words, the positive electrode sheet, the first bonding layer, the base film, the second bonding layer, and the negative electrode sheet are sequentially stacked. The first bonding layer 41 is configured to bond the positive electrode sheet 50 with the base film 30, and the second bonding layer 42 is configured to bond the negative electrode sheet 60 with the base film 30, so that the positive electrode sheet 50 is bonded with the negative electrode sheet 60.

In some other embodiments, the battery separator 200 includes only the bonding layer 40, in other words, the battery 300 includes the positive electrode sheet 50, the bonding layer 40, and the negative electrode sheet 60 that are sequentially stacked. The binder may be directly coated on the positive electrode sheet 50 or the negative electrode sheet 60, and dried. Then, the positive electrode sheet 50 coated with the binder is bonded with the negative electrode sheet 60, or the negative electrode sheet 60 coated with the binder is bonded with the positive electrode sheet 50.

In some embodiments, the battery 300 further includes an electrolyte, and the electrolyte includes a carbonate compound and a lithium-containing compound.

In some embodiments, the battery 300 includes a housing. At least one accommodating cavity is formed in inner space of the housing. The accommodating cavity is configured to accommodate an electrode core set. The electrode core set includes at least one electrode core. Each electrode core includes an electrode core body, a positive electrode tab, and a negative electrode tab. The electrode core body includes the positive electrode sheet 50, the battery separator 200, and the negative electrode sheet 60 that are sequentially stacked. The positive electrode tab is connected to the positive electrode sheet 50, and the negative electrode tab is connected to the negative electrode sheet 60. The positive electrode sheet 50, the battery separator 200, and the negative electrode sheet 60 may form the electrode core body in, but not limited to, a winding manner, a stacking manner, or a heating and bonding manner.

The battery 300 is provided with an electrolyte filling port, which is configured to inject the electrolyte into the accommodating cavity, and the electrolyte is configured to wet the electrode core body.

In some embodiments, an electrolyte in each accommodating cavity can only flow in the accommodating cavity under limitation of a partition plate.

The carbonate compound includes at least one of dimethyl carbonate, ethyl methyl carbonate, diethyl carbonate, and ethylene carbonate. The lithium-containing compound includes at least one of LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi.

A swelling degree of the foregoing core 10 in the electrolyte is greater than 0 and less than or equal to 0.5, and a swelling degree of the foregoing shell 20 in the electrolyte is greater than 0 and less than or equal to 5.

The present disclosure is further described in detail below in combination with specific embodiments. The following embodiments are only used to describe and explain the present disclosure and not to limit the present disclosure.

### Embodiment 1

A crystalline polymer is provided. The crystalline polymer is a high-density polyethylene microsphere, crystallinity of the high-density polyethylene microsphere is 90%, and a swelling degree of the high-density polyethylene microsphere in an electrolyte is 0.02. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the high-density polyethylene microsphere is 0.7 µm, and a melting point of the high-density polyethylene microsphere is 130°C.

A first monomer and a second monomer are provided. The first monomer is methyl methacrylate, and the second monomer is methacrylic acid. Methyl methacrylate and methacrylic acid in a mass ratio of 98:2 were added to a stirring tank and stirred at a rotation speed of 500 rpm for 1h to obtain a shell material.

The high-density polyethylene microsphere, the shell material, sodium dodecyl benzene sulfonate, and water were added to a reaction tank and stirred for 1h, where a mass ratio of the high-density polyethylene microsphere, the shell material, and sodium dodecyl benzene sulfonate was 87:12.7:0.3, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Methyl methacrylate and methacrylic acid as well as methyl methacrylate itself were polymerized on the high-density polyethylene microsphere to form a shell 20 that completely wrapped the high-density polyethylene microsphere, thereby forming bonding material particles 100. The bonding material particles 100 were dispersed in water to form a binder.

A glass-transition temperature of the formed shell 20 is 60°C, an average thickness of the formed shell 20 is 0.3 µm, and a swelling degree of the formed shell 20 in an electrolyte is 2.5. An average particle size of the formed bonding material particle 100 is 1.0 µm, and a swelling degree of the formed bonding material particle 100 is 0.5.

According to the foregoing method for preparing a battery separator, a battery separator is prepared by using the formed binder, and a battery is prepared by using the obtained battery separator, a positive electrode sheet, and a negative electrode sheet.

### Embodiment 2

A crystalline polymer is provided. The crystalline polymer is a high-density polyethylene microsphere, crystallinity of the high-density polyethylene microsphere is 90%, and a swelling degree of the high-density polyethylene microsphere in an electrolyte is 0.02. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the high-density polyethylene microsphere is 5.2 µm, and a melting point of the high-density polyethylene microsphere is 130°C.

A first monomer and a second monomer are provided. The first monomer is methyl methacrylate, and the second monomer is methacrylic acid. Methyl methacrylate and methacrylic acid in a mass ratio of 98:2 were added to a stirring tank and stirred at a rotation speed of 500 rpm for 1h to obtain a shell material.

The high-density polyethylene microsphere, the shell material, sodium dodecyl benzene sulfonate, and water were added to a reaction tank and stirred for 1h, where a mass ratio of the high-density polyethylene microsphere, the shell material, and sodium dodecyl benzene sulfonate was 78:21.5:0.5, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Methyl methacrylate and methacrylic acid as well as methyl methacrylate itself were polymerized on the high-density polyethylene microsphere to form a shell 20 that completely wrapped the high-density polyethylene microsphere, thereby forming bonding material particles 100. The bonding material particles 100 were dispersed in water to form a binder.

A glass-transition temperature of the formed shell 20 is 60°C, an average thickness of the formed shell 20 is 0.3 µm, and a swelling degree of the formed shell 20 in an electrolyte is 2.5. An average particle size of the formed bonding material particle 100 is 5.5 µm, and a swelling degree of the formed bonding material particle 100 is 0.55.

According to the foregoing method for preparing a battery separator, a battery separator is prepared by using the formed binder, and a battery is prepared by using the obtained battery separator, a positive electrode sheet, and a negative electrode sheet.

### Embodiment 3

A crystalline polymer is provided. The crystalline polymer is a high-density polyethylene microsphere, crystallinity of the high-density polyethylene microsphere is 90%, and a swelling degree of the high-density polyethylene microsphere in an electrolyte is 0.02. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the high-density polyethylene microsphere is 8.7 µm, and a melting point of the high-density polyethylene microsphere is 130°C.

A first monomer and a second monomer are provided. The first monomer is methyl methacrylate, and the second monomer is methacrylic acid. Methyl methacrylate and methacrylic acid in a mass ratio of 98:2 were added to a stirring tank and stirred at a rotation speed of 500 rpm for 1h to obtain a shell material.

The high-density polyethylene microsphere, the shell material, sodium dodecyl benzene sulfonate, and water were added to a reaction tank and stirred for 1h, where a mass ratio of the high-density polyethylene microsphere, the shell material, and sodium dodecyl benzene sulfonate was 70:29:1.0, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Methyl methacrylate and methacrylic acid as well as methyl methacrylate itself were polymerized on the high-density polyethylene microsphere to form a shell 20 that completely wrapped the high-density polyethylene microsphere, thereby forming bonding material particles 100. The bonding material particles 100 were dispersed in water to form a binder.

A glass-transition temperature of the formed shell 20 is 60°C, an average thickness of the formed shell 20 is 0.3 µm, and a swelling degree of the formed shell 20 in an electrolyte is 2.5. An average particle size of the formed bonding material particle 100 is 9.0 µm, and a swelling degree of the formed bonding material particle 100 is 0.57.

According to the foregoing method for preparing a battery separator, a battery separator is prepared by using the formed binder, and a battery is prepared by using the obtained battery separator, a positive electrode sheet, and a negative electrode sheet.

### Embodiment 4

A crystalline polymer is provided. The crystalline polymer is a high-density polyethylene microsphere, crystallinity of the high-density polyethylene microsphere is 90%, and a swelling degree of the high-density polyethylene microsphere in an electrolyte is 0.02. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the high-density polyethylene microsphere is 19.7 µm, and a melting point of the high-density polyethylene microsphere is 130°C.

A first monomer and a second monomer are provided. The first monomer is methyl methacrylate, and the second monomer is methacrylic acid. Methyl methacrylate and methacrylic acid in a mass ratio of 98:2 were added to a stirring tank and stirred at a rotation speed of 500 rpm for 1h to obtain a shell material.

The high-density polyethylene microsphere, the shell material, sodium dodecyl benzene sulfonate, and water were added to a reaction tank and stirred for 1h, where a mass ratio of the high-density polyethylene microsphere, the shell material, and sodium dodecyl benzene sulfonate was 67:32:1.5, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Methyl methacrylate and methacrylic acid as well as methyl methacrylate itself were polymerized on the high-density polyethylene microsphere to form a shell 20 that completely wrapped the high-density polyethylene microsphere, thereby forming bonding material particles 100. The bonding material particles 100 were dispersed in water to form a binder.

A glass-transition temperature of the formed shell 20 is 60°C, an average thickness of the formed shell 20 is 0.3 µm, and a swelling degree of the formed shell 20 in an electrolyte is 2.5. An average particle size of the formed bonding material particle 100 is 20.0 µm, and a swelling degree of the formed bonding material particle 100 is 0.52.

According to the foregoing method for preparing a battery separator, a battery separator is prepared by using the formed binder, and a battery is prepared by using the obtained battery separator, a positive electrode sheet, and a negative electrode sheet.

### Embodiment 5

A crystalline polymer is provided. The crystalline polymer is a high-density polyethylene microsphere, crystallinity of the high-density polyethylene microsphere is 90%, and a swelling degree of the high-density polyethylene microsphere in an electrolyte is 0.02. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the high-density polyethylene microsphere is 0.7 µm, and a melting point of the high-density polyethylene microsphere is 130°C.

A first monomer and a second monomer are provided. The first monomer is methyl methacrylate, and the second monomer is methacrylic acid. Methyl methacrylate and methacrylic acid in a mass ratio of 98:2 were added to a stirring tank and stirred at a rotation speed of 500 rpm for 1h to obtain a shell material.

The high-density polyethylene microsphere, the shell material, sodium dodecyl benzene sulfonate, and water were added to a reaction tank and stirred for 1h, where a mass ratio of the high-density polyethylene microsphere, the shell material, and sodium dodecyl benzene sulfonate was 34.5:62:3.5, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Methyl methacrylate and methacrylic acid as well as methyl methacrylate itself were polymerized on the high-density polyethylene microsphere to form a shell 20 that completely wrapped the high-density polyethylene microsphere, thereby forming bonding material particles 100. The bonding material particles 100 were dispersed in water to form a binder.

A glass-transition temperature of the formed shell 20 is 60°C, an average thickness of the formed shell 20 is 6.5 µm, and a swelling degree of the formed shell 20 in an electrolyte is 2.5. An average particle size of the formed bonding material particle 100 is 7.2 µm, and a swelling degree of the formed bonding material particle 100 is 3.2.

According to the foregoing method for preparing a battery separator, a battery separator is prepared by using the formed binder, and a battery is prepared by using the obtained battery separator, a positive electrode sheet, and a negative electrode sheet.

### Embodiment 6

A crystalline polymer is provided. The crystalline polymer is a high-density polyethylene microsphere, crystallinity of the high-density polyethylene microsphere is 90%, and a swelling degree of the high-density polyethylene microsphere in an electrolyte is 0.02. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the high-density polyethylene microsphere is 0.7 µm, and a melting point of the high-density polyethylene microsphere is 130°C.

A first monomer and a second monomer are provided. The first monomer is methyl methacrylate, and the second monomer is methacrylic acid. Methyl methacrylate and methacrylic acid in a mass ratio of 98:2 were added to a stirring tank and stirred at a rotation speed of 500 rpm for 1h to obtain a shell material.

The high-density polyethylene microsphere, the shell material, sodium dodecyl benzene sulfonate, and water were added to a reaction tank and stirred for 1h, where a mass ratio of the high-density polyethylene microsphere, the shell material, and sodium dodecyl benzene sulfonate was 90.0:8.0:2.0, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Methyl methacrylate and methacrylic acid as well as methyl methacrylate itself were polymerized on the high-density polyethylene microsphere to form a shell 20 that completely wrapped the high-density polyethylene microsphere, thereby forming bonding material particles 100. The bonding material particles 100 were dispersed in water to form a binder.

A glass-transition temperature of the formed shell 20 is 60°C, an average thickness of the formed shell 20 is 0.3 µm, and a swelling degree of the formed shell 20 in an electrolyte is 2.5. An average particle size of the formed bonding material particle 100 is 1.0 µm, and a swelling degree of the formed bonding material particle 100 is 0.2.

According to the foregoing method for preparing a battery separator, a battery separator is prepared by using the formed binder, and a battery is prepared by using the obtained battery separator, a positive electrode sheet, and a negative electrode sheet.

### Embodiment 7

A crystalline polymer is provided. The crystalline polymer is a high-density polyethylene microsphere, crystallinity of the high-density polyethylene microsphere is 90%, and a swelling degree of the high-density polyethylene microsphere in an electrolyte is 0.02. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the high-density polyethylene microsphere is 0.7 µm, and a melting point of the high-density polyethylene microsphere is 130°C.

A first monomer and a second monomer are provided. The first monomer is methyl methacrylate, and the second monomer is methacrylic acid. Methyl methacrylate and methacrylic acid in a mass ratio of 42:58 were added to a stirring tank and stirred at a rotation speed of 500 rpm for 1h to obtain a shell material.

The high-density polyethylene microsphere, the shell material, sodium dodecyl benzene sulfonate, and water were added to a reaction tank and stirred for 1h, where a mass ratio of the high-density polyethylene microsphere, the shell material, and sodium dodecyl benzene sulfonate was 87.0:12.7:0.3, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Methyl methacrylate and methacrylic acid as well as methyl methacrylate itself were polymerized on the high-density polyethylene microsphere to form a shell 20 that completely wrapped the high-density polyethylene microsphere, thereby forming bonding material particles 100. The bonding material particles 100 were dispersed in water to form a binder.

A glass-transition temperature of the formed shell 20 is 60°C, an average thickness of the formed shell 20 is 0.3 µm, and a swelling degree of the formed shell 20 in an electrolyte is 2.5. An average particle size of the formed bonding material particle 100 is 1.0 µm, and a swelling degree of the formed bonding material particle 100 is 0.6.

According to the foregoing method for preparing a battery separator, a battery separator is prepared by using the formed binder, and a battery is prepared by using the obtained battery separator, a positive electrode sheet, and a negative electrode sheet.

### Embodiment 8

A crystalline polymer is provided, and the crystalline polymer is tri-monomer graft of polyethylene (PE), glycidyl methacrylate (Gma), styrene (St), and butyl acrylate (BA), briefly referred to as PE-g-(Gma+St+BA) tri-monomer graft. Crystallinity of the crystalline polymer is 44%, and a swelling degree of the crystalline polymer in an electrolyte is 0.27. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the crystalline polymer is 0.7 µm, and a melting point of the crystalline polymer is 120.5°C.

A first monomer and a second monomer are provided. The first monomer is methyl methacrylate, and the second monomer is methacrylic acid. Methyl methacrylate and methacrylic acid in a mass ratio of 98:2 were added to a stirring tank and stirred at a rotation speed of 500 rpm for 1h to obtain a shell material.

PE-g-(Gma+St+BA) tri-monomer graft, the shell material, sodium dodecyl benzene sulfonate, and water were added to a reaction tank and stirred for 1h, where a mass ratio of the high-density polyethylene microsphere, the shell material, and sodium dodecyl benzene sulfonate was 87.0:12.7:0.3, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Methyl methacrylate and methacrylic acid as well as methyl methacrylate itself were polymerized on the high-density polyethylene microsphere to form a shell 20 that completely wrapped the high-density polyethylene microsphere, thereby forming bonding material particles 100. The bonding material particles 100 were dispersed in water to form a binder.

A glass-transition temperature of the formed shell 20 is 60°C, an average thickness of the formed shell 20 is 0.3 µm, and a swelling degree of the formed shell 20 in an electrolyte is 2.5. An average particle size of the formed bonding material particle 100 is 1.0 µm, and a swelling degree of the formed bonding material particle 100 is 1.2.

According to the foregoing method for preparing a battery separator, a battery separator is prepared by using the formed binder, and a battery is prepared by using the obtained battery separator, a positive electrode sheet, and a negative electrode sheet.

### Embodiment 9

A crystalline polymer is provided. The crystalline polymer is a polypropylene microsphere, crystallinity of the polypropylene microsphere is 93%, and a swelling degree of the polypropylene microsphere in an electrolyte is 0.01. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the polypropylene microsphere is 3.5 µm, and a melting point of the polypropylene microsphere is 160°C.

A first monomer and a second monomer are provided. The first monomer is ethyl methacrylate, and the second monomer is a compound including a sulfonic group. Ethyl methacrylate and the compound including the sulfonic group in a mass ratio of 97:3 were added to a stirring tank and stirred at a rotation speed of 500 rpm for 1h to obtain a shell material.

The polypropylene microsphere, the shell material, sodium dodecyl benzene sulfonate, and water were added to a reaction tank and stirred for 1h, to obtain a mixed solution, where a mass ratio of the polypropylene microsphere, the shell material, and sodium dodecyl benzene sulfonate was 59.2:39.0:1.8, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Ethyl methacrylate and the compound including the sulfonic group as well as ethyl methacrylate itself were polymerized on the polypropylene microsphere to form a shell 20 that completely wrapped the polypropylene microsphere, thereby forming bonding material particles 100. The bonding material particles 100 were dispersed in water to form a binder.

A glass-transition temperature of the formed shell 20 is 70°C, an average thickness of the formed shell 20 is 1.5 µm, and a swelling degree the formed shell 20 in an electrolyte is 2. An average particle size of the formed bonding material particle 100 is 5 µm.

According to the foregoing method for preparing a battery separator, a battery separator is prepared by using the formed binder, and a battery is prepared by using the obtained battery separator, a positive electrode sheet, and a negative electrode sheet.

### Embodiment 10

A crystalline polymer is provided. The crystalline polymer is a low-density polyethylene microsphere, crystallinity of the low-density polyethylene microsphere is 52%, and a swelling degree of the low-density polyethylene microsphere in an electrolyte is 0.11. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the low-density polyethylene microsphere is 1.2 µm, and a melting point of the low-density polyethylene microsphere is 90°C.

A first monomer and a second monomer are provided. The first monomer includes ethyl methacrylate and acrylonitrile, and the second monomer is a carboxylic acid monomer. The first monomer and the second monomer in a mass ratio of 96:4 were added to a stirring tank and stirred at a rotation speed of 500 rpm for 1h to obtain a shell material.

The low-density polyethylene microsphere, the shell material, octadecylamine acetate, and water were added to a reaction tank and stirred for 1h, where a mass ratio of the low-density polyethylene microsphere, the shell material, and octadecylamine acetate is 84.2:15.0:0.8, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Methyl methacrylate, acrylonitrile, and the carboxylic acid monomer were polymerized on the low-density polyethylene microsphere, and methyl methacrylate and acrylonitrile were polymerized on the low-density polyethylene microsphere, to form a shell 20 that completely wrapped the low-density polyethylene microsphere, thereby forming bonding material particles 100. The bonding material particles 100 were dispersed in water to form a binder.

A glass-transition temperature of the formed shell 20 is 65°C, an average thickness the formed shell 20 is 0.5 µm, and a swelling degree the formed shell 20 in an electrolyte is 1.1. An average particle size of the formed bonding material particle 100 is 1.7 µm.

According to the foregoing method for preparing a battery separator, a battery separator is prepared by using the formed binder, and a battery is prepared by using the obtained battery separator, a positive electrode sheet, and a negative electrode sheet.

### Embodiment 11

A crystalline polymer is provided. The crystalline polymer is a polyvinylidene fluorine microsphere, crystallinity of the polyvinylidene fluorine microsphere is 50%, and a swelling degree of the polyvinylidene fluorine microsphere in an electrolyte is 0.15. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the polyvinylidene fluorine microsphere is 0.4 µm, and a melting point of the polyvinylidene fluorine microsphere is 152°C.

A first monomer and a second monomer are provided. The first monomer is methacrylonitrile, and the second monomer is a compound including a sulfonic group. Methacrylonitrile and the compound including the sulfonic group in a mass ratio of 99.7:0.3 were added to a stirring tank and stirred at a rotation speed of 500 rpm for 1h to obtain a shell material.

The polyvinylidene fluorine microsphere, the shell material, octadecylamine acetate, and water were added to a reaction tank and stirred for 1h, where a mass ratio of the polyvinylidene fluorine microsphere, the shell material, and octadecylamine acetate is 89.3:10.0:0.7, to obtain a mixed solution, and then the reaction tank was heated, so that a temperature of the mixed solution increased to 60°C to 80°C. When the mixed solution was stirred at a rotation speed of 500 rpm, cumene hydroperoxide was slowly added to the mixed solution while the mixed solution was stirred. After cumene hydroperoxide was added dropwise, the temperature of the mixed solution was kept at 80°C and the mixed solution was stirred continuously at 500 rpm for 2h to 8h. Methacrylonitrile and the compound including the sulfonic group as well as methacrylonitrile itself were polymerized on the polyvinylidene fluorine microsphere to form a shell 20 that completely wrapped the polyvinylidene fluorine microsphere, thereby forming bonding material particles 100. The bonding material particles 100 were dispersed in water to form a binder.

A glass-transition temperature of the formed shell 20 is 35°C, an average thickness of the formed shell 20 is 0.1 µm, and a swelling degree the formed shell 20 in an electrolyte is 1.2. An average particle size of the formed bonding material particle 100 is 0.5 µm.

According to the foregoing method for preparing a battery separator, a battery separator is prepared by using the formed binder, and a battery is prepared by using the obtained battery separator, a positive electrode sheet, and a negative electrode sheet.

### Embodiment 12

A crystalline polymer is provided. The crystalline polymer is a poly-1-butene microsphere, crystallinity of the poly-1-butene microsphere is 72%. A mass ratio of the poly-1-butene microsphere, a shell material, and sodium dodecyl benzene sulfonate is 77.5:21.0:1.5. A swelling degree of the poly-1-butene microsphere in an electrolyte is 0.08. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the poly-1-butene microsphere is 2.0 µm, and a melting point of the poly-1-butene microsphere is 110°C.

A first monomer and a second monomer are provided. The first monomer is ethyl methacrylate, and the second monomer includes a compound including a sulfonic group and a compound including a carboxyl group. The first monomer and the second monomer in a mass ratio of 95.2:4.8 were added to a stirring tank and stirred at a rotation speed of 500 rpm for 1h to obtain a shell material.

The poly-1-butene microsphere, the shell material, sodium dodecyl benzene sulfonate, and water were added to a reaction tank and stirred for 1h, to obtain a mixed solution. Then, the reaction tank was heated, so that a temperature of the mixed solution increased to 60°C to 80°C. When the mixed solution was stirred at a rotation speed of 500 rpm, cumene hydroperoxide was slowly added to the mixed solution while the mixed solution was stirred. After cumene hydroperoxide was added dropwise, the temperature of the mixed solution was kept at 80°C and the mixed solution was stirred continuously at 500 rpm for 2h to 8h. Ethyl methacrylate, the compound including the sulfonic group, and the compound including the carboxyl group were polymerized on the poly-1-butene microsphere, and ethyl methacrylate itself was polymerized on the poly-1-butene microsphere to form a shell 20 that completely wrapped the poly-1-butene microsphere, thereby forming bonding material particles 100. The bonding material particles 100 were dispersed in water to form a binder.

A glass-transition temperature of the formed shell 20 is 45°C, an average thickness of the formed shell 20 is 1 µm, and a swelling degree the formed shell 20 in an electrolyte is 1.5. An average particle size of the formed bonding material particle 100 is 3 µm.

According to the foregoing method for preparing a battery separator, a battery separator is prepared by using the formed binder, and a battery is prepared by using the obtained battery separator, a positive electrode sheet, and a negative electrode sheet.

### Embodiment 13

A crystalline polymer is provided. The crystalline polymer is a linear low-density polyethylene microsphere, crystallinity of the linear low-density polyethylene microsphere is 63%, and a swelling degree of the linear low-density polyethylene microsphere in an electrolyte is 0.095. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the linear low-density polyethylene microsphere is 1.3 µm, and a melting point of the linear low-density polyethylene microsphere is 120°C.

A first monomer and a second monomer are provided. The first monomer is ethyl acrylate, and the second monomer is a compound including a phosphonic group. Ethyl acrylate and the compound including the phosphonic group in a mass ratio of 97.4:2.6 were added to a stirring tank and stirred at a rotation speed of 500 rpm for 1h to obtain a shell material.

The linear low-density polyethylene microsphere, the shell material, octadecylamine acetate, and water were added to a reaction tank and stirred for 1h, where a mass ratio of the linear low-density polyethylene microsphere, the shell material, and octadecylamine acetate is 81.8:17.0:1.2, to obtain a mixed solution, and then the reaction tank was heated, so that a temperature of the mixed solution increased to 60°C to 80°C. When the mixed solution was stirred at a rotation speed of 500 rpm, cumene hydroperoxide was slowly added to the mixed solution while the mixed solution was stirred. After cumene hydroperoxide was added dropwise, the temperature of the mixed solution was kept at 80°C and the mixed solution was stirred continuously at 500 rpm for 2h to 8h. Ethyl acrylate and the compound including the phosphonic group were polymerized on the linear low-density polyethylene microsphere, and ethyl acrylate itself was polymerized on the linear low-density polyethylene microsphere, to form a shell 20 that completely wrapped the linear low-density polyethylene microsphere, thereby forming bonding material particles 100. The bonding material particles 100 were dispersed in water to form a binder.

A glass-transition temperature of the formed shell 20 is 45°C, an average thickness of the formed shell 20 is 0.6 µm, and a swelling degree the formed shell 20 in an electrolyte is 1.8. An average particle size of the formed bonding material particle 100 is 1.9 µm.

According to the foregoing method for preparing a battery separator, a battery separator is prepared by using the formed binder, and a battery is prepared by using the obtained battery separator, a positive electrode sheet, and a negative electrode sheet.

### Embodiment 14

A crystalline polymer is provided. The crystalline polymer is a high-density polyethylene microsphere, crystallinity of the high-density polyethylene microsphere is 90%, and a swelling degree of the high-density polyethylene microsphere in an electrolyte is 0.02. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the high-density polyethylene microsphere is 0.7 µm, and a melting point of the high-density polyethylene microsphere is 130°C.

A first monomer is provided. The first monomer is methyl methacrylate. Methyl methacrylate was added to a stirring tank and stirred at a rotation speed of 500 rpm for 1h, to obtain a shell material.

The high-density polyethylene microsphere, the shell material, sodium dodecyl benzene sulfonate, and water were added to a reaction tank and stirred for 1h, where a mass ratio of the high-density polyethylene microsphere, the shell material, and sodium dodecyl benzene sulfonate is 87:12.7:0.3, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Methyl methacrylate itself was polymerized on the high-density polyethylene microsphere to form a shell 20 that completely wrapped the high-density polyethylene microsphere, thereby forming bonding material particles 100. The bonding material particles 100 were dispersed in water to form a binder.

A glass-transition temperature of the formed shell 20 is 60°C, an average thickness of the formed shell 20 is 0.3 µm, and a swelling degree of the formed shell 20 in an electrolyte is 2.5. An average particle size of the formed bonding material particle 100 is 1 µm. A difference between Embodiment 14 and Embodiment 1 lies in that the shell material in Embodiment 14 does not include a second monomer.

According to the foregoing method for preparing a battery separator, a battery separator is prepared by using the formed binder, and a battery is prepared by using the obtained battery separator, a positive electrode sheet, and a negative electrode sheet.

### Comparative example 1

A crystalline polymer that is a poly(methyl methacrylate) microsphere is provided, and a swelling degree of the poly(methyl methacrylate) microsphere in an electrolyte is 2.5. The electrolyte is a carbonate solution of LiPF₆, and concentration of LiPF₆ is 1 mol/L. Carbonate ester is a mixture formed by mixing dimethyl carbonate, ethyl methyl carbonate, diethyl carbonate, and ethylene carbonate in a volume ratio of 1:2:1:2. An average particle size of the poly(methyl methacrylate) microsphere is 0.7 µm.

A first monomer and a second monomer are provided. The first monomer is styrene sulfonic acid, and the second monomer is a monomer including a carboxyl group. Styrene sulfonic acid and the monomer including the carboxyl group in a mass ratio of 96.2:3.8 were added to a stirring tank and stirred at a rotation speed of 500 rpm for 1h to obtain a shell material.

The poly(methyl methacrylate) microsphere, the shell material, sodium dodecyl benzene sulfonate, and water were added to a reaction tank and stirred for 1h, where a mass ratio of the poly(methyl methacrylate) microsphere, the shell material, and sodium dodecyl benzene sulfonate is 87:12.7:0.3, to obtain a mixed solution, and then the reaction tank was heated, so that a temperature of the mixed solution increased to 60°C to 80°C. When the mixed solution was stirred at a rotation speed of 500 rpm, tert-butyl 2-ethylperoxyacetate was slowly added to the mixed solution while the mixed solution was stirred. After tert-butyl 2-ethylperoxyacetate was added dropwise, the temperature of the mixed solution was kept at 80°C and the mixed solution was stirred continuously at 500 rpm for 2h to 8h. Styrene sulfonic acid and the monomer including carboxyl group as well as styrene sulfonic acid itself were polymerized on the poly(methyl methacrylate) microsphere to form a shell that completely wrapped the poly(methyl methacrylate) microsphere, thereby forming bonding material particles.

A glass-transition temperature of the formed shell is 80°C, an average thickness of the formed shell is 0.3 µm, and a swelling degree the formed shell in an electrolyte is 3.8. An average particle size of the formed bonding material particle is 1.0 µm.

According to the foregoing method for preparing a battery separator, a battery separator is prepared by using the formed binder, and a battery is prepared by using the obtained battery separator, a positive electrode sheet, and a negative electrode sheet.

### Comparative example 2

A battery is prepared by using a base film 30, a positive electrode sheet, and a negative electrode sheet. The base film 30 is a polyethylene film.

A test of a capacity retention rate of the battery is performed on the battery in Embodiment 1 to Embodiment 14 and Comparative example 1 and Comparative example 2. A test process is: The battery was placed in a crystal oven at 25°C, so that the battery was charged and discharged at a rate of 1C/1C, and cycles were performed for 100 times, to obtain a discharging capacity of the 100^{th} cycle of testing. The capacity retention rate (%) of the battery is obtained by dividing the discharging capacity by a maximum discharging capacity. For results, refer to Table 1.

**Table 1**

| | Capacity retention rate (%) |
|---|---|
| Embodiment 1 | 98.9 |
| Embodiment 2 | 98.1 |
| Embodiment 3 | 98.1 |
| Embodiment 4 | 97.9 |
| Embodiment 5 | 97.9 |
| Embodiment 6 | 98.7 |
| Embodiment 7 | 98.5 |
| Embodiment 8 | 98.0 |
| Embodiment 9 | 99.7 |
| Embodiment 10 | 99.7 |
| Embodiment 11 | 99.7 |
| Embodiment 12 | 99.7 |
| Embodiment 13 | 99.8 |
| Embodiment 14 | 97.5 |
| Comparative example 1 | 96.7 |
| Comparative example 2 | 96.5 |

It can be learned from Table 1 that, a capacity retention rate of the battery prepared in Embodiment 1 to Embodiment 14 after 100 cycles of testing is higher than that in Comparative example 1, indicating that the battery prepared by using the bonding material particle provided in the present disclosure has better cycle performance than a bonding material particle in which a core and a shell are both an amorphous polymer.

The capacity retention rate of the battery prepared in Embodiment 1 to Embodiment 14 after 100 cycles of testing is higher than that in Comparative example 2, indicating that the battery prepared by using the bonding material particle provided in the present disclosure has better cycle performance than the battery prepared without a binder.

A capacity retention rate of the battery prepared in Embodiment 1 to Embodiment 3 after 100 cycles of testing is higher than that in Embodiment 4, indicating that use of a bonding material particle with a core having an average particle size in a range of 0.1 µm to 10 µm provides better cycle performance than use of a bonding material particle with a core having an average particle size outside the range of 0.1 µm to 10 µm.

A capacity retention rate of the battery prepared in Embodiment 1 after 100 cycles of testing is higher than that in Embodiment 5, indicating that use of a bonding material particle with a shell having an average thickness in a range of 0.1 µm to 5 µm provides better cycle performance than use of a bonding material particle with a shell having an average thickness outside the range of 0.1 µm to 5 µm.

The capacity retention rate of the battery prepared in Embodiment 1 after 100 cycles of testing is higher than that in Embodiment 6, indicating that a bonding material particle with a mass ratio of a crystalline polymer to a shell material in a range of (60-90):(10-40) has better cycle performance than a bonding material particle with a mass ratio of the crystalline polymer to the shell material outside the range of (60-90):(10-40).

The capacity retention rate of the battery prepared in Embodiment 1 after 100 cycles of testing is higher than that in Embodiment 7, indicating that a bonding material particle with a mass ratio of a first monomer to a second monomer in a range of (50-99.9):(0.1-50) has better cycle performance than a bonding material particle with a mass ratio of the first monomer to the second monomer outside the range of (50-99.9):(0.1-50).

The capacity retention rate of the battery prepared in Embodiment 1 after 100 cycles of testing is higher than that in Embodiment 8, indicating that use of a bonding material particle with a core having crystallinity in a range of 50% to 95% provides better cycle performance than use of a bonding material particle with a core having crystallinity outside the range of 50% to 95%.

The capacity retention rate of the battery prepared in Embodiment 1 after 100 cycles of testing is higher than that in Embodiment 14, indicating that a bonding material particle with a shell polymerized by a first monomer and a second monomer has better cycle performance than a bonding material particle with a shell polymerized by only the first monomer.

FIG. 6 is a scanning electronic microscope diagram of a bonding layer 40 of a battery separator 200 according to an embodiment of the present disclosure. The bonding layer 40 shown in FIG. 6 is formed by coating the binder prepared in the foregoing Embodiment 1 on a base film 30, and drying the base film 30. The bonding layer 40 includes spherical bonding material particles 100 (as indicated by an arrow in FIG. 6).

FIG. 7 is a scanning electronic microscope diagram of a bonding layer 40 of a battery separator 200 according to another embodiment of the present disclosure. The bonding layer 40 shown in FIG. 7 is formed by mixing the binder prepared in Embodiment 9 and aluminum oxide to obtain a slurry, where a mass of a bonding material particle in the binder is equal to 6% of a mass of aluminum oxide, then coating the slurry on a base film 30, and drying the base film 30. The bonding layer 40 includes spherical bonding material particles 100 (as indicated by arrows in FIG. 7).

In the foregoing embodiments, the descriptions of each embodiment have different focuses, and for a part that is not described in detail in an embodiment, reference may be made to the relevant descriptions of other embodiments.

The foregoing descriptions are some implementations of the present disclosure. It should be noted that a person of ordinary skill in the art may make several improvements and refinements without departing from the principle of the present disclosure, and the improvements and refinements shall fall within the protection scope of the present disclosure.

## Claims

1. A binder, comprising:
a bonding material particle (100), the bonding material particle (100) comprising:
a core (10), the core (10) comprising a crystalline polymer; and
a shell (20), the shell (20) wrapping at least a part of an outer surface of the core (10), and the shell (20) comprising an amorphous polymer.

2. The binder according to claim 1, wherein crystallinity of the crystalline polymer ranges from 50% to 95%.

3. The binder according to claim 1, wherein the crystalline polymer is a polyolefin-based resin.

4. The binder according to claim 3, wherein the polyolefin-based resin comprises at least one of polyethylene, polypropylene, polyvinylidene fluorine, poly-1-butene, and poly-4-methyl-1-pentene.

5. The binder according to claim 1, wherein a melting point of the crystalline polymer is greater than or equal to 90°C and less than or equal to 200°C.

6. The binder according to claim 1, wherein a glass-transition temperature of the amorphous polymer is greater than or equal to 0°C and less than or equal to 70°C.

7. The binder according to claim 1, wherein the amorphous polymer is formed by polymerizing at least a first monomer, and the first monomer is a monomer comprising an allyl group.

8. The binder according to claim 7, wherein the monomer comprising the allyl group comprises at least one of methyl acrylate, ethyl acrylate, methyl methacrylate, ethyl methacrylate, and acrylonitrile.

9. The binder according to claim 7, wherein the amorphous polymer is formed by polymerizing the first monomer and a second monomer, and the second monomer is a monomer comprising an acid group.

10. The binder according to claim 9, wherein the monomer comprising the acid group comprises at least one of a compound comprising a carboxyl group, a compound comprising a sulfonic group, and a compound comprising a phosphonic group.

11. The binder according to claim 9, wherein a mass ratio of the first monomer to the second monomer in the amorphous polymer is (50-99.9):(0.1-50).

12. The binder according to claim 1, wherein a mass ratio of the core (10) to the shell (20) is (60-90):(10-40).

13. The binder according to claim 1, wherein an average particle size of the bonding material particle (100) ranges from 0.2 µm to 15 µm, an average particle size of the core (10) ranges from 0.1 µm to 10 µm, and an average thickness of the shell (20) ranges from 0.1 µm to 5 µm.

14. A method for preparing a binder, comprising:
mixing a crystalline polymer, a shell material, an emulsifier, and a solvent, and stirring uniformly to obtain a mixed solution; and
adding an initiator dropwise into the mixed solution, to enable the shell material to be polymerized on an outer surface of the crystalline polymer to form a shell (20) comprising an amorphous polymer, the shell (20) wrapping at least a part of the outer surface of the crystalline polymer, and the crystalline polymer wrapped by the shell (20) forming a core (10) of a bonding material particle.

15. The method for preparing a binder according to claim 14, wherein the shell material comprises a first monomer, and the first monomer is a monomer comprising an allyl group; and the adding an initiator dropwise into the mixed solution, to enable the shell material to be polymerized on an outer surface of the crystalline polymer to form a shell (20) comprising an amorphous polymer comprises:
adding the initiator dropwise into the mixed solution, to enable the first monomer to be polymerized on the outer surface of the crystalline polymer to form the shell (20) comprising the amorphous polymer, a dropwise addition rate of the initiator ranging from 1 mL/min to 5 mL/min.

16. The method for preparing a binder according to claim 14, wherein the shell material comprises a first monomer and a second monomer, the first monomer is a monomer comprising an allyl group, the second monomer is a monomer comprising an acid group, and before the mixing a crystalline polymer, a shell material, an emulsifier, and a solvent, the method for preparing a binder further comprises:
uniformly mixing the first monomer and the second monomer to obtain the shell material; and
the adding an initiator dropwise into the mixed solution, to enable the shell material to be polymerized on an outer surface of the crystalline polymer to form a shell (20) comprising an amorphous polymer comprises:
adding the initiator dropwise into the mixed solution, to enable the first monomer and the second monomer to be polymerized on the outer surface of the crystalline polymer to form the shell (20) comprising the amorphous polymer, a dropwise addition rate of the initiator ranging from 1 mL/min to 5 mL/min.

17. The method for preparing a binder according to claim 14, wherein a mass ratio of the crystalline polymer to the shell material is (60-90):(10-40).

18. A battery (300), the battery (300) comprising a positive electrode sheet (50), a negative electrode sheet (60), and a battery separator (200), the battery separator (200) being arranged between the positive electrode sheet (50) and the negative electrode sheet (60), the battery separator (200) comprising a base film (30) and a bonding layer (40), the bonding layer (40) being arranged on one side of the base film (30) or two opposite sides of the base film (30), and the bonding layer (40) comprising the binder according to any one of claims 1 to 13.

19. The battery (300) according to claim 18, wherein the bonding layer (40) further comprises a filler, the filler comprises a heat-resistant material, and the heat-resistant material comprises at least one of aluminum oxide, silicon dioxide, boehmite, magnesium hydroxide, calcium oxide, and titanium oxide.

20. The battery (300) according to claim 19, further comprising an electrolyte, a swelling degree, in the electrolyte, of a core (10) of a bonding material particle (100) in the binder being greater than 0 and less than or equal to 0.5, and a swelling degree, in the electrolyte of the battery, of a shell (20) of the bonding material particle (100) in the binder being greater than 0 and less than or equal to 5.
